# FASCICULE DE BREVET EUROPEEN

(11) **EP 3 295 005 B1**
(45) Date de publication et mention de la délivrance du brevet: **03.07.2019**
(21) Numéro de dépôt: 16727754.0
(22) Date de dépôt: 11.05.2016
(51) Int. Cl.: F02C 6/08, B64D 13/02, F04D 27/02, F02C 9/18

(54) **VANNE PAPILLON DE DECHARGE D'UN COMPRESSEUR POUR TURBOMACHINE D'AERONEF**
DROSSELVENTIL ZUM ENTLÜFTEN EINES VERDICHTERS FÜR EIN FLUGZEUGTRIEBWERK
BUTTERFLY VALVE FOR BLEEDING A COMPRESSOR FOR AN AIRCRAFT TURBINE ENGINE

(30) Priorité: 13.05.2015 FR 1554301
(43) Date de publication de la demande: 21.03.2018
(73) Titulaire: Safran Aircraft Engines, 75015 Paris (FR)
(72) Inventeur: JOUDAREFF, Arnaud, 77550 Moissy Cramayel (FR); MOUTON, Pierre, Charles, 77550 Moissy Cramayel (FR); WAISSI, Bellal, 77550 Moissy Cramayel (FR)
(74) Mandataire: Brevalex
(86) Numéro de dépôt international: PCT/FR2016/051101
(87) Numéro de publication internationale: WO 2016/181069

(56) Documents cités:
- EP-A2- 0 190 943
- US-A1- 2009 229 682
- US-A1- 2009 261 279

## Description

### DOMAINE TECHNIQUE

La présente invention se rapporte au domaine des turbomachines d'aéronef, et plus particulièrement aux vannes de décharge d'un compresseur équipant une telle turbomachine.

Par décharge d'un compresseur de turbomachine, il est entendu le fait de dériver momentanément une partie du flux d'air traversant le compresseur, par exemple vers une veine d'air extérieure au compresseur, de façon à limiter le débit massique de l'air délivré par le compresseur. A cet égard, il est noté qu'une décharge de pression se rapporte à un cas où la décharge a pour effet secondaire de diminuer la pression de l'air dans le compresseur, mais de manière générale, la décharge a d'abord pour effet de limiter ou diminuer le débit massique de l'air en sortie de ce compresseur.

L'invention s'applique en particulier aux turbopropulseurs, mais également à d'autres types de turbomachines d'aéronef comme les turboréacteurs, de préférence à double flux et à double corps.

### ÉTAT DE LA TECHNIQUE ANTÉRIEURE

Dans les turbomachines d'aéronef, il est connu d'implanter des systèmes de décharge de compresseur pour maintenir un fonctionnement stable en régime stationnaire et transitoire. En effet, dans certaines conditions de vol comme par exemple la phase de descente de l'aéronef, la quantité d'air délivrée par le compresseur basse ou haute pression, c'est-à-dire le débit massique de l'air délivré par le compresseur, peut être trop élevée pour garantir un fonctionnement correct de la turbomachine. Au-delà d'un certain débit d'air, des instabilités telles que des décollements apparaissent au niveau des aubes du compresseur ce qui a pour effet de provoquer un pompage et possiblement d'inverser le sens d'écoulement de l'air dans le compresseur. Les systèmes de décharge de compresseur permettent ainsi d'évacuer une partie de l'air traversant le compresseur, pour éviter les différents phénomènes de pompage et de décollement de filets fluides le long des aubes de compresseur. Un tel système de décharge de compresseur est par exemple connu du document FR 2 823 532.

De l'art antérieur, il est notamment connu d'utiliser des vannes papillon pour assurer la décharge d'un compresseur. A cette fin, chaque vanne comprend un corps de vanne définissant un canal à travers lequel de l'air issu du compresseur est destiné à pénétrer, ainsi qu'un papillon monté rotatif à l'intérieur du canal, selon un axe de rotation de papillon qui le traverse diamétralement. La vanne comprend en outre un dispositif de commande de la position angulaire du papillon, ce dispositif étant équipé d'un organe d'actionnement mobile relié au papillon par des moyens de liaison.

Dans une première configuration connue de l'art antérieur, l'organe d'actionnement est un piston à double effet dont la grande face est soumise à un premier effort de pression modulable, appliqué par de l'air prélevé dans le canal du corps de vanne. La petite face du piston est quant à elle soumise à un second effort de pression d'air également prélevé dans le canal, mais dont la valeur de la pression reste identique à celle de l'air transitant par le compresseur. Ce second effort ne présente ainsi aucun caractère modulable, contrairement au premier effort de pression dont la modulation permet d'entraîner le piston dans un sens ou dans l'autre, avec pour conséquence l'ouverture ou la fermeture du papillon. Plus précisément, l'ouverture du papillon s'obtient en augmentant l'intensité du premier effort de pression, tandis que sa fermeture est provoquée par une réduction de ce premier effort de pression. La modulation de l'intensité du premier effort de pression s'opère via un système de contrôle de vanne, habituellement le FADEC (l'acronyme anglais de « Full Authority Digital Engine Control »). Le système de contrôle est capable de délivrer un signal électrique à un réducteur de pression conçu pour faire varier l'intensité de la pression du premier effort de pression, en réponse au signal électrique reçu.

Cependant, cette première configuration présente plusieurs inconvénients parmi lesquels des frottements importants observés au sein de la vanne, ainsi que le caractère compressible de l'air dans le vérin logeant le piston à double effet. Ces inconvénients, en particulier la compressibilité de l'air, induisent des phénomènes non linéaires nuisant à la stabilité de réponse du dispositif de commande.

Pour résoudre au mieux les problèmes précités, il a été proposé une seconde configuration de vanne papillon dans laquelle l'organe de commande est remplacé par un piston simple effet, dont la grande face est toujours soumise au premier effort de pression modulable. En revanche, le second effort est mécanique et produit par un ressort dont la force de rappel s'oppose au premier effort de pression. Dans cette seconde configuration, l'ouverture du papillon s'opère en relâchant le premier effort de pression, via le réducteur de pression. Dans ce cas, la force de rappel du ressort surmonte le premier effort de pression et conduit l'organe d'actionnement à se déplacer dans le sens provoquant l'ouverture du papillon.

Le second effort mécanique déployé par le ressort est ainsi dépendant de la position du papillon, puisqu'il est d'autant plus élevé que le papillon est proche de sa position fermée. Cette seconde configuration est avantageuse car non seulement elle permet de s'affranchir en grande partie des problèmes liés au caractère compressible de l'air dans le vérin et des problèmes liés aux conditions environnementales (pression à altitude considérée), mais également du fait que la vitesse linéaire de l'organe d'actionnement n'est plus constante, mais dépendante de la position angulaire du papillon. Il en résulte avantageusement une amélioration de la rapidité et de la stabilité de réponse du dispositif de commande.

Cependant, cette seconde configuration de la vanne papillon reste perfectible, pour les raisons suivantes. Tout d'abord, la rapidité de réponse du dispositif de commande reste affectée par le couple aérodynamique exercé par l'air sur le papillon, et qui freine l'ouverture de ce dernier. En outre, le ressort est conçu pour délivrer un second effort mécanique adapté à une plage restreinte de valeurs de pression du premier effort de pression. En dehors de cette plage de valeurs, le second effort mécanique peut s'avérer trop élevé ou trop faible, et nuire ainsi à la rapidité et à la stabilité de réponse du dispositif de commande. Cela s'avère problématique puisque la pression au sein du compresseur est susceptible de varier dans de grandes proportions, parfois pouvant atteindre un facteur cinquante. Cette pression dans la veine du compresseur ayant une incidence directe sur l'intensité du premier effort de pression, il peut ainsi exister des situations de fonctionnement dans lesquelles la conception du ressort se révèle inadaptée pour délivrer un second effort mécanique avec une intensité appropriée.

Des systèmes de vannes papillon selon l'art antérieur sont divulgués dans les documents EP0190943, US2009/0261279 et US2009/0229682.

### EXPOSÉ DE L'INVENTION

L'invention a pour but de remédier au moins partiellement aux inconvénients mentionnés ci-dessus, relatifs aux réalisations de l'art antérieur.

Pour ce faire, l'invention a pour objet une vanne papillon de décharge d'un compresseur pour turbomachine d'aéronef, la vanne comprenant un corps de vanne définissant un canal à travers lequel de l'air issu du compresseur est destiné à pénétrer, un papillon monté rotatif à l'intérieur du canal selon un axe de rotation de papillon, ainsi qu'un dispositif de commande de la position angulaire du papillon, le dispositif de commande comprenant un organe d'actionnement mobile relié au papillon par des moyens de liaison, l'organe d'actionnement étant configuré pour être soumis :
- à un premier effort de pression modulable appliqué par de l'air issu du compresseur, par exemple prélevé directement dans la veine primaire du compresseur ou possiblement dans ledit canal, le premier effort de pression modulable conduisant à rappeler le papillon vers une position fermée ; et
- à un second effort mécanique conduisant à rappeler le papillon vers une position ouverte.

Selon l'invention, l'axe de rotation est excentré relativement à un segment médian dudit papillon de sorte que l'air dans le canal génère un couple aérodynamique sur ledit papillon, ledit couple aérodynamique engendrant, par l'intermédiaire des moyens de liaison, ledit second effort mécanique sur l'organe d'actionnement.

En d'autres termes, le second effort mécanique n'est plus délivré par un ressort comme dans la seconde configuration de l'art antérieur, mais provient directement du couple aérodynamique subi par le papillon dans le canal de la vanne. Du fait de l'excentrement de l'axe de rotation du papillon, le couple aérodynamique s'appliquant sur le papillon est également proportionnel à l'angle d'ouverture de ce papillon, en ce sens qu'il est d'autant plus élevé que le papillon est proche de sa position fermée. Par conséquent, le second effort mécanique provoqué par ce couple aérodynamique conserve également un caractère progressif, comme avec le ressort de l'art antérieur. Mais le couple aérodynamique étant directement dépendant de la pression d'air dans le canal du corps de vanne, le second effort mécanique qui en résulte se trouve avantageusement adapté au premier effort de pression également dépendant de la pression d'air dans la veine du compresseur. L'invention permet ainsi de conférer à la vanne une rapidité améliorée, c'est-à-dire un temps de réponse réduit sur toute la plage de fonctionnement de la turbomachine, et donc sur toute la plage d'actionnement de la vanne de décharge et plus particulièrement lors d'une manoeuvre d'ouverture de cette vanne.

Par ailleurs, en cas de surpression d'air survenant dans le canal, le couple aérodynamique peut provoquer une ouverture partielle extrêmement rapide du papillon, par compression de l'air assurant le premier effort de pression. En effet, le caractère compressible de l'air est ici judicieusement mis à profit pour décharger rapidement le compresseur, et anticiper ainsi le changement de consigne du fait que le temps de réponse pneumatique est largement supérieur au temps de réponse électrique. Cela permet de rétablir très rapidement la stabilité de la turbomachine.

L'invention présente par ailleurs de préférence au moins l'une des caractéristiques optionnelles suivantes, prises isolément ou en combinaison.

L'organe d'actionnement est un piston à simple effet, et lesdits moyens de liaison sont raccordés à une tige du piston.

Ledit papillon présente une forme générale de disque. D'autres formes pourraient néanmoins être retenues, comme par exemple une forme elliptique, sans sortir du cadre de l'invention. Dans le cas d'un disque, le segment médian correspond à un diamètre, par rapport auquel l'axe de rotation du disque est excentré. Dans le cas d'une ellipse, le segment médian correspond au petit axe ou au grand axe de l'ellipse. Dans tous les cas, en raison de son excentrement, l'axe de rotation du papillon ne passe pas par le centre de ce papillon.

Le dispositif de commande comporte un réducteur de pression agencé entre un organe de prélèvement d'air dans ledit canal du corps de vanne, et une chambre de pression délimitée par l'organe d'actionnement.

Ledit réducteur de pression comporte un moteur couple pour faire varier la pression de l'air prélevé sortant du réducteur de pression.

La vanne dispose d'une information sur l'état du système. Cette information peut être issue d'une mesure effectuée par un capteur de position de l'organe d'actionnement, et/ou par un capteur de position du papillon.

L'invention a également pour objet un module de turbomachine comprenant un compresseur ainsi qu'une vanne papillon de décharge telle que décrite ci-dessus, le canal du corps de vanne communiquant avec une veine du compresseur.

L'invention a également pour objet une turbomachine d'aéronef comprenant un tel module, ainsi qu'un système de contrôle de la vanne papillon, ce système étant de préférence le FADEC. La turbomachine est préférentiellement un turbopropulseur, mais peut alternativement être un turboréacteur à double flux et à double corps. D'autres types de turbomachines peuvent néanmoins être envisagés, sans sortir du cadre de l'invention.

Enfin, l'invention a pour objet un procédé de commande de décharge au sein d'un compresseur d'une telle turbomachine, ce procédé consistant à moduler, au sein de ladite vanne papillon, l'intensité du premier effort de pression s'appliquant sur l'organe d'actionnement et s'opposant audit second effort mécanique provoqué par le couple aérodynamique s'exerçant sur le papillon, de manière à commander l'ouverture / la fermeture du papillon de la vanne.

D'autres avantages et caractéristiques de l'invention apparaîtront dans la description détaillée non limitative ci-dessous.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des dessins annexés parmi lesquels ;
- la figure 1 représente une vue schématique en coupe longitudinale d'un turbopropulseur comprenant une vanne papillon de décharge selon l'invention ;
- la figure 2 représente une vue détaillée de la vanne de décharge montrée sur la figure précédente, selon un mode de réalisation préféré de l'invention, la vanne étant représentée dans une position fermée ;
- les figure 3a à 3c représentent plusieurs vues distinctes d'une partie de la vanne montrée sur la figure précédente, montrant spécifiquement le papillon dans son corps de vanne, dans différentes positions ;
- la figure 3d est une vue schématisant les moments s'appliquant sur les différentes portions du papillon ; et
- la figure 4 est une vue similaire à celle de la figure 2, avec la vanne représentée dans une position ouverte partiellement.

### EXPOSÉ DÉTAILLÉ DE MODES DE RÉALISATION PARTICULIERS

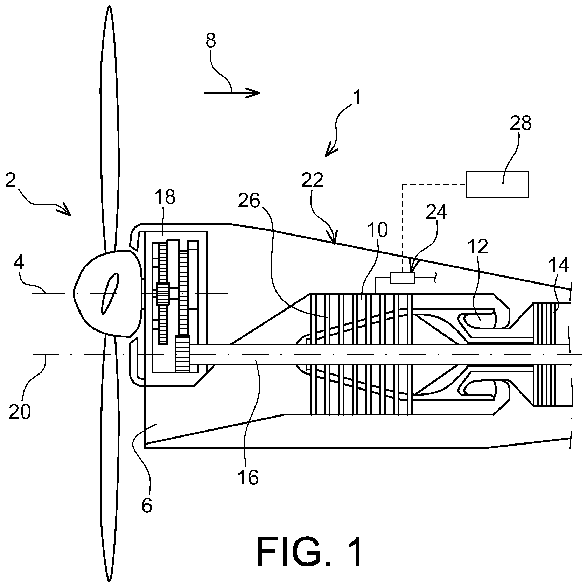

En référence tout d'abord à la figure 1, il est représenté un turbopropulseur 1 pour aéronef, selon la présente invention. Le turbopropulseur comporte de manière classique une hélice 2 mobile à rotation selon un axe de rotation 4. A l'aval de l'hélice 2, le turbopropulseur 1 comporte une entrée d'air 6, située verticalement sous l'axe de rotation 4 de l'hélice. A cet égard, il est noté que dans l'ensemble de la description, les termes « amont » et « aval » sont employés en référence à une direction principale de circulation d'air à travers l'hélice 2, cette direction étant parallèle à l'axe 4 et schématisée par la flèche 8 sur la figure 1.

L'entrée d'air 6 alimente en air un compresseur ou un groupe de compresseurs 10, à l'aval duquel se trouve une chambre de combustion 12. Les gaz issus de la combustion se détendent dans une turbine ou un groupe de turbines 14, qui entraîne un arbre moteur ou un groupe d'arbres 16. Cet arbre 16 entraîne à son tour un boîtier d'engrenages de réduction de vitesse de rotation 18, dont l'organe de sortie permet de faire tourner l'hélice 2 selon son axe 4. L'arbre moteur 16, le groupe de compresseurs 10, la chambre de combustion 12 et le groupe de turbines 14 sont centrés sur un axe 20 parallèle à l'axe de rotation 4 de l'hélice 2, l'entrée d'air 6 se trouvant verticalement sous cet axe 20.

Le turbopropulseur 1 comporte un module 22 comprenant le groupe compresseurs 10 ainsi qu'une ou plusieurs vannes de décharge 24 selon l'invention, ces vannes répondant à la définition conventionnelle ci-dessus et étant capables, le cas échéant, de remplir une fonction de décharge de pression visant à diminuer la pression d'air dans le compresseur.

Chaque vanne 24 communique avec une veine d'air primaire 26 délimitée par le groupe de compresseurs 10. La vanne 24 est reliée électriquement à un dispositif de contrôle 28, qui est de préférence le FADEC de ce turbopropulseur.

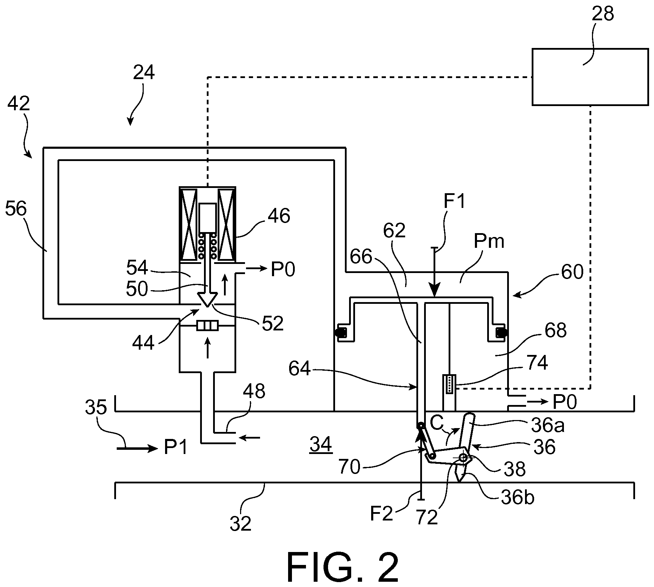

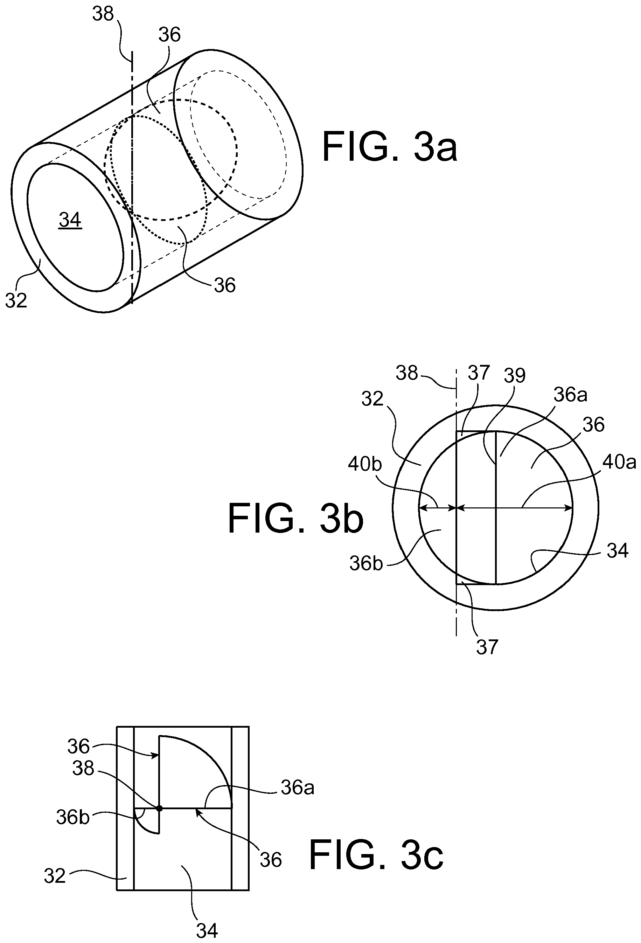

Les figures 2 à 3c représentent un mode de réalisation préféré de la vanne de décharge 24, qui est du type vanne papillon. Elle comprend un corps de vanne 32 définissant un canal 34 à travers lequel de l'air 35, issu de la veine du compresseur, est destiné à pénétrer. Le canal 34 présente une section sensiblement circulaire. Au sein de ce canal, la vanne 24 présente un obturateur rotatif 36, dit papillon. Ce dernier est monté rotatif à l'intérieur du canal 34, selon un axe de rotation 38 orthogonal à la direction principale de circulation d'air dans ce canal. Le papillon 36 présente une forme générale de disque, de diamètre sensiblement identique au diamètre intérieur du canal 34. L'agencement du papillon 36 dans le canal 34 est montré dans différentes vues sur les figures 3a à 3c, sur chacune desquelles le papillon a été représenté en position fermée ainsi qu'en position totalement ouverte. Dans la position fermée, le papillon 36 est sensiblement orthogonal à l'axe du canal 34, de manière à totalement obturer ce dernier et interdire le passage de l'air vers l'aval. Aucune décharge de débit d'air n'est réalisée dans cette position fermée de l'obturateur, correspondant également à celle de la figure 2. La position totalement ouverte est décalée de 90° par rapport à la position fermée, c'est-à-dire que le papillon 36 est sensiblement parallèle à l'axe du canal 34. Dans cette position, le canal présente une section de passage maximale au niveau de l'obturateur, ce qui permet d'assurer une décharge de débit d'air importante. L'air issu de la veine du compresseur n'est plus empêché de circuler par le papillon 36, et peut donc être évacué vers l'aval. Bien entendu, des positions intermédiaires sont possibles, en fonction de la quantité d'air à évacuer pour limiter les phénomènes problématiques de pompage et de décollement.

L'une des particularités de l'invention, dont les effets seront décrits ci-après, réside dans l'excentrement de l'axe de rotation 38 du papillon 36. L'axe 38 n'est pas agencé selon un diamètre 39 du disque, mais est excentré sur le papillon, toujours en étant parallèle à ce dernier en traversant son épaisseur. Sur la figure 3b, il a été clairement représenté l'excentrement de l'axe de rotation 38 relativement au diamètre 39 du disque.

L'axe excentré 38 délimite ici deux portions distinctes de disque, référencées 36a et 36b. La portion 36a correspond à la portion dont la surface est la plus étendue (surface supérieure à un demi-disque), tandis que la portion 36b correspond à la portion dont la surface est la plus petite (surface inférieure à un demi-disque). La distance minimale entre la périphérie de la portion de papillon 36a et le centre de l'axe de rotation 38 est référencée 40a, de même que la distance minimale entre la périphérie de la portion de papillon 36b et le centre de l'axe de rotation 38 est référencée 40b. Le rapport entre ces deux distances 40a, 40b est fixé en fonction de différents paramètres, et propre à chaque application. A titre d'exemple indicatif, ce rapport n'est pas supérieur à 10.

Pour permettre la rotation du papillon 36 malgré l'excentrement de son axe 38, la surface de délimitation du canal 34 peut présenter des évidements appropriés référencés 37 sur la figure 3b, ces évidements 37 évitant les interférences mécaniques entre le corps de vanne 32 et le papillon 36 lors du pivotement de ce dernier.

En référence plus spécifiquement à la figure 2, la vanne 24 comporte de plus un dispositif 42 de commande de la position angulaire du papillon 36. Le dispositif de commande comprend un réducteur de pression 44 équipé d'un moteur couple 46 commandé par le FADEC 28. L'entrée du réducteur de pression 44 communique ici avec un organe 48 de prélèvement d'air dans le canal 34, au sein duquel l'air se présente à une pression P1 correspondant à celle de la veine du compresseur. Cet organe de prélèvement 48 prend la forme d'un conduit dont l'une des extrémités est plongée dans le canal 34 du corps de vanne 32. Alternativement, l'organe 48 pourrait assurer un prélèvement d'air directement dans la veine primaire du compresseur, sans sortir du cadre de l'invention.

Le réducteur de pression 44 présente une conception connue, et ne sera donc pas décrit de façon détaillée. De manière conventionnelle, il est alimenté en air provenant du canal 34 par l'organe de prélèvement 48. En fonction du pilotage du moteur couple 46 par le FADEC, un piston 50 obture plus ou moins un orifice 52 d'échappement d'air, vers une chambre 54 ouverte à la pression atmosphérique P0. Plus l'orifice 52 présente une section importante, plus la perte de pression est élevée, et inversement. La position du piston 50 conditionne par conséquent la pression de l'air sortant du réducteur de pression 44, cette sortie s'effectuant par un conduit 56 alimentant un vérin d'actionnement 60 à simple effet.

Plus précisément, le conduit 56 communique avec une chambre de pression 62 du vérin 60, cette chambre étant en partie délimitée par la grande face d'un piston 64 à simple effet. Dans cette chambre 62, l'air se trouve à une pression modulée Pm dont l'intensité est commandée par le réducteur de pression 44, de la manière indiquée ci-dessus.

De l'autre côté du piston 64, à savoir du côté de la tige de piston 66, la chambre 68 est ouverte sur l'extérieur de manière à être maintenue sous pression atmosphérique P0.

En outre, l'extrémité de la tige de piston 66 est reliée au papillon 36 par des moyens de liaison 70, prenant ici la forme d'une ou plusieurs biellettes. Ces moyens de liaison 70 sont d'une part articulés sur l'extrémité de la tige de piston 66, et d'autre part solidaires d'un arbre 72 centré sur l'axe de rotation 38. Cet arbre 72 permet d'assurer la liaison pivotante entre le papillon 36 et le corps de vanne 32, dans lequel cet arbre est inséré. Cet arbre 72 peut être remplacé par deux ergots placés à la périphérie du papillon 36, toujours en coopérant avec le corps de vanne 32.

En fonctionnement, une partie de l'air du compresseur est introduite dans le canal 34 à une pression P1. Une partie de l'air de la veine primaire ou de l'air du canal 34 est prélevée par l'organe 48 et transite par le réducteur 44 au sein duquel sa pression est modulée, jusqu'à l'obtention d'une pression désirée Pm observée jusque dans la chambre de pression 62. Cette pression engendre un premier effort de pression F1 sur la grande face du piston 64 à simple effet. Ce premier effort F1 conduit à rappeler le papillon 36 dans sa position fermée telle qu'observée sur la figure 2. Etant donné que la valeur de ce premier effort de pression F1 dépend de la commande du réducteur de pression 44, ce premier effort F1 présente un caractère dit modulable.

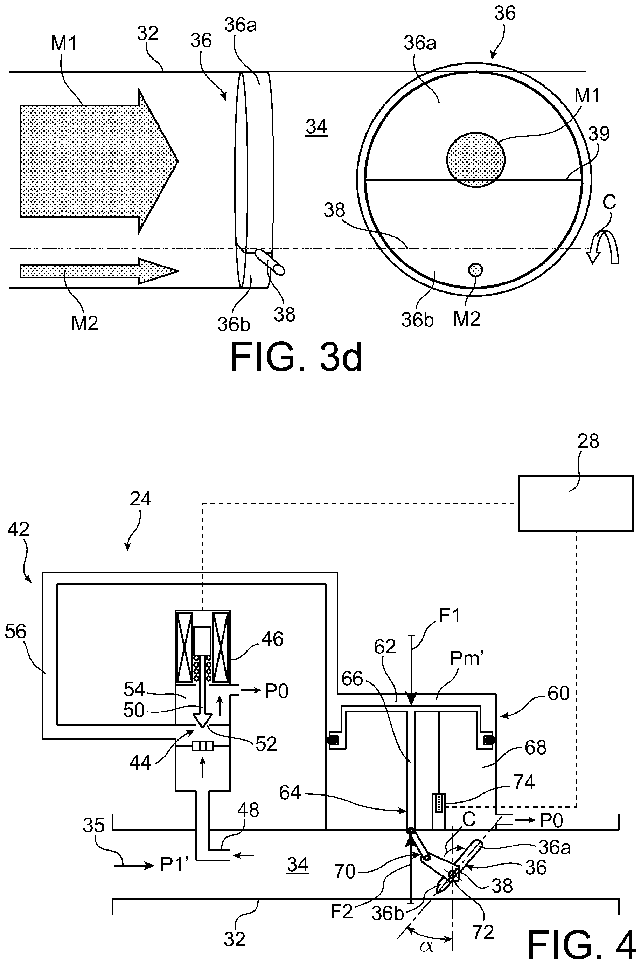

En outre, du fait de l'excentrement de l'axe de rotation 38 du papillon 36, ce dernier est soumis à un couple aérodynamique C qui a tendance à le rappeler vers sa position ouverte. Comme cela a été schématisé sur la figure 3d, cela provient du fait que le moment M1 appliqué par l'air sur la grande portion de papillon 36a est supérieur au moment M2 appliqué par l'air sur la petite portion de papillon 36b.

Ce couple aérodynamique C non nul est transmis par les moyens de liaison 70 à l'extrémité de la tige de piston 66, pour générer sur celle-ci un second effort mécanique F2. Aussi, la position du piston 66 et celle du papillon 36 sont conditionnées par la résultante des deux efforts antagonistes F1 et F2, tous les deux dépendants de la pression P1 de l'air dans le canal 34.

En référence à présent à la figure 4, lorsqu'une surpression P1' apparait dans le canal 34, le FADEC 28 détecte qu'il est nécessaire d'effectuer une décharge de débit d'air via la ou les vannes papillon 24, afin d'éviter les phénomènes de pompage et de décollement. En fonction de l'intensité de la pression P1', le FADEC détermine l'angle d'ouverture α que le papillon 36 doit adopter. Il délivre en conséquence un signal électrique au moteur couple 46 afin d'obtenir une pression Pm' inférieure à la pression antérieure Pm, et dont l'intensité est telle que la résultante des deux efforts antagonistes F1 et F2 conduise le piston 64 à se déplacer dans la position souhaitée, amenant le papillon 36 dans une position ouverte avec l'angle d'ouverture α désiré. Pour ce faire, il est prévu un capteur 74 de position du piston 64, et/ou un capteur de position angulaire du papillon (non représenté). Il peut s'agir d'un capteur de mesure continue comme par exemple un capteur LVDT (de l'anglais « Linear Variable Differential Transformer ») placé sur le vérin 60, ou alors d'un capteur RVDT (de l'anglais « Rotary Variable Differential Transformer » placé sur le papillon. L'information sur l'état du système pourrait également provenir d'un capteur de pression positionné dans le canal.

Plus précisément, la section d'ouverture de l'orifice d'échappement 52 du réducteur 44 est variée à partir d'un signal d'erreur existant entre la position d'ouverture réelle du papillon, et la position correspondant à la consigne.

Une fois la position cible atteinte, les deux efforts F1 et F2 sont rééquilibrés par modulation du premier effort F1, afin de stopper le piston 64 dans la position souhaitée.

Par ailleurs, il est noté que de manière à conserver un couple de rappel minimum à l'approche de la position de pleine ouverture du papillon, la butée de fin de course vers l'ouverture du vérin de commande est positionnée légèrement avant d'atteindre cette pleine ouverture.

Grâce à cette conception particulière, l'invention permet de conférer à la vanne 24 une rapidité accrue, c'est-à-dire un temps de réponse amélioré sur toute la plage de fonctionnement de la turbomachine. De plus, en cas de surpression, l'ouverture de la vanne 24 est anticipée puisque le couple aérodynamique qui en résulte conduit à augmenter très rapidement le second effort F2, entraînant ainsi un déplacement approprié du piston 64 par compression de l'air dans la chambre 62, avant même que le FADEC 28 ait ordonné un changement de consigne. L'invention confère ainsi à la vanne de décharge 24 une meilleure protection contre une éventuelle perte de contrôle due à la compressibilité de l'air.

Avec cette conception de la vanne papillon 24 particulière à l'invention, il est ainsi possible de mettre en oeuvre un procédé de commande de décharge du compresseur 10 en modulant via le FADEC 28 l'intensité du premier effort de pression F1 s'appliquant sur le piston 64 et s'opposant au second effort mécanique F2, provoqué par le couple aérodynamique C s'exerçant sur le papillon. Cette modulation du premier effort F1 permet de commander l'ouverture / la fermeture du papillon 36 de la vanne 24, en fonction des besoins rencontrés en termes de décharge du compresseur. De plus, il est important de souligner que l'effort de rappel pneumatique F2 est en permanence adapté à l'effort pneumatique de commande F1. En effet, les deux efforts résultent chacun d'un prélèvement d'air sur le compresseur, et leur variation sera relativement similaire. Cette solution avantageuse contraste avec l'utilisation dans l'art antérieur d'un ressort mécanique, dont la caractéristique ne dépend pas des conditions atmosphériques (altitude, etc.).

Bien entendu, diverses modifications peuvent être apportées par l'homme du métier à l'invention qui vient d'être décrite, sans sortir du cadre de l'exposé de l'invention. Par exemple, l'invention pourrait s'appliquer à un turboréacteur à double flux et à double corps. Dans ce cas de figure, chaque vanne papillon 24 pourrait être agencée de manière à permettre un prélèvement d'air entre le compresseur basse pression et le compresseur haute pression, et de façon à évacuer l'air dans la veine secondaire du turboréacteur.

## Revendications

1. Vanne papillon (24) de décharge d'un compresseur (10) pour turbomachine (1) d'aéronef, la vanne comprenant un corps de vanne (32) définissant un canal (34) à travers lequel de l'air issu du compresseur est destiné à pénétrer, un papillon (36) monté rotatif à l'intérieur du canal selon un axe de rotation (38) de papillon, ainsi qu'un dispositif (42) de commande de la position angulaire du papillon (36), le dispositif de commande (42) comprenant un organe d'actionnement mobile (64) relié au papillon par des moyens de liaison (70), l'organe d'actionnement (64) étant configuré pour être soumis :
- à un premier effort de pression modulable (F1) appliqué par de l'air issu du compresseur, le premier effort de pression modulable conduisant à rappeler le papillon (36) vers une position fermée ; et
- à un second effort mécanique (F2) conduisant à rappeler le papillon (36) vers une position ouverte,
**caractérisée en ce que** l'axe de rotation (38) est excentré relativement à un segment médian (39) dudit papillon (36) de sorte que l'air dans le canal (34) génère un couple aérodynamique (C) sur ledit papillon (36), ledit couple aérodynamique engendrant, par l'intermédiaire des moyens de liaison (70), ledit second effort mécanique (F2) sur l'organe d'actionnement (64).

2. Vanne selon la revendication 1, **caractérisée en ce que** l'organe d'actionnement (64) est un piston à simple effet, lesdits moyens de liaison (70) étant raccordés à une tige du piston.

3. Vanne selon la revendication 1 ou la revendication 2, **caractérisée en ce que** ledit papillon (36) présente une forme générale de disque.

4. Vanne selon l'une quelconque des revendications précédentes, **caractérisée en ce que** le dispositif de commande (42) comporte un réducteur de pression (44) agencé entre un organe (48) de prélèvement d'air dans ledit canal (34) du corps de vanne (32), et une chambre de pression (62) délimitée par l'organe d'actionnement (64).

5. Vanne selon la revendication 4, **caractérisée en ce que** ledit réducteur de pression (44) comporte un moteur couple (46) pour faire varier la pression de l'air prélevé sortant du réducteur de pression.

6. Vanne selon l'une quelconque des revendications précédentes, **caractérisée en ce qu'**elle comporte un capteur (74) de position de l'organe d'actionnement (64), et/ou un capteur de position du papillon (36).

7. Module (22) de turbomachine d'aéronef comprenant un compresseur (10) ainsi qu'une vanne papillon (24) de décharge selon l'une quelconque des revendications précédentes, le canal (34) du corps de vanne (32) communiquant avec une veine (26) du compresseur (10).

8. Turbomachine (1) d'aéronef comprenant un module (22) selon la revendication précédente, ainsi qu'un système (28) de contrôle de la vanne papillon (24).

9. Turbomachine selon la revendication précédente, **caractérisée en ce qu'**elle est un turbopropulseur.

10. Procédé de commande de décharge au sein d'un compresseur (10) d'une turbomachine (1) selon la revendication 7 ou la revendication 8, **caractérisé en ce qu'**il consiste à moduler, au sein de ladite vanne papillon (24), l'intensité du premier effort de pression (F1) s'appliquant sur l'organe d'actionnement (64) et s'opposant audit second effort mécanique (F2) provoqué par le couple aérodynamique s'exerçant sur le papillon (36), de manière à commander l'ouverture / la fermeture du papillon de la vanne (24).

## Patentansprüche

1. Drosselventil (24) zur Entladung eines Kompressors (10) für das Turbotriebwerk (1) eines Luftfahrzeugs, wobei das Ventil einen Ventilkörper (32), der einen Kanal (34) definiert, durch den Luft aus dem Kompressor dringen kann, eine Drosselklappe (36), die im Inneren des Kanals drehbar in einer Drosselklappen-Drehachse (38) montiert ist, sowie eine Steuervorrichtung (42) für die Winkelposition der Drosselklappe (36) umfasst, wobei die Steuervorrichtung (42) ein bewegliches Betätigungsorgan (64) umfasst, das über Verbindungsmittel (70) mit der Drosselklappe verbunden ist, wobei das Betätigungsorgan (64) für folgende Belastungen konfiguriert ist:
- eine erste einstellbare Druckkraft (F1), die von aus dem Kompressor dringender Luft erzeugt wird, wobei die erste einstellbare Druckkraft dazu führt, dass die Drosselklappe (36) in eine geschlossene Position geführt wird; und
- eine zweite mechanische Kraft (F2), die dazu führt, dass die Drosselklappe (36) in eine geöffnete Position geführt wird,
**dadurch gekennzeichnet, dass** die Drehachse (38) exzentrisch zu einem mittleren Segment (39) der genannten Drosselklappe (36) angeordnet ist, so dass die Luft im Kanal (34) ein aerodynamisches Drehmoment (C) an der genannten Drosselklappe (36) erzeugt, wobei das genannte aerodynamische Drehmoment anhand der Verbindungsmittel (70) die genannte zweite mechanische Kraft (F2), die auf das Betätigungsorgan (64) einwirkt, erzeugt.

2. Ventil gemäß Anspruch 1, **dadurch gekennzeichnet, dass** es sich bei dem Betätigungsorgan (64) um einen einfachwirkenden Kolben handelt, wobei die genannten Verbindungsmittel (70) an einer Kolbenstange befestigt sind.

3. Ventil gemäß Anspruch 1 oder Anspruch 2, **dadurch gekennzeichnet, dass** die genannte Drosselklappe (36) die generelle Form einer Scheibe aufweist.

4. Ventil gemäß einem der vorgenannten Ansprüche, **dadurch gekennzeichnet, dass** die Steuervorrichtung (42) einen Druckminderer (44) umfasst, der zwischen einer Vorrichtung (48) zur Entnahme von Luft aus dem genannten Kanal (34) des Ventilkörpers (32) und einer Druckkammer (62) angeordnet ist, die von dem Betätigungsorgan (64) begrenzt wird.

5. Ventil gemäß Anspruch 4, **dadurch gekennzeichnet, dass** der genannte Druckminderer (44) einen Drehmomentmotor (46) umfasst, um den Druck der aus dem Druckminderer entnommenen Luft zu verändern.

6. Ventil gemäß einem der vorgenannten Ansprüche, **dadurch gekennzeichnet, dass** es einen Positionssensor (74) für das Betätigungsorgan (64) und/oder einen Positionssensor für die Drosselklappe (36) umfasst.

7. Turbotriebwerksmodul (22) eines Luftfahrzeugs, das einen Kompressor (10) sowie ein Drosselventil (24) zur Entladung gemäß einem der vorgenannten Ansprüche umfasst, wobei der Kanal (34) im Ventilkörper (32) mit einer Strombahn (26) des Kompressors (10) verbunden ist.

8. Turbotriebwerk (1) eines Luftfahrzeugs mit einem Modul (22) gemäß vorstehendem Anspruch sowie einem System (28) zur Steuerung des Drosselventils (24).

9. Turbotriebwerk gemäß dem vorstehenden Anspruch, **dadurch gekennzeichnet, dass** es sich um ein Turbopropellertriebwerk handelt.

10. Verfahren zur Steuerung der Entladung innerhalb des Kompressors (10) eines Turbotriebwerks (1) gemäß Anspruch 7 oder Anspruch 8, **dadurch gekennzeichnet, dass** es darin besteht, innerhalb des genannten Drosselventils (24) die Stärke der ersten Druckkraft (F1) zu steuern, die auf das Betätigungsorgan (64) einwirkt und der genannten zweiten mechanischen Kraft (F2) entgegenwirkt, die durch das aerodynamische Drehmoment erzeugt wird, das auf die Drosselklappe (36) einwirkt, um das Öffnen/Schließen der Klappe des Ventils (24) zu steuern.

## Claims

1. Butterfly valve (24) for bleeding a compressor (10) for an aircraft turbine engine (1), the valve comprising a valve body (32) defining a channel (34) through which the air from the compressor is intended to enter, a butterfly (36) rotatably mounted inside the channel about an axis of butterfly rotation (38), as well as a device (42) for controlling the angular position of the butterfly (36), the control device (42) comprising a mobile actuation member (64) connected to the butterfly by linking means (70), the actuation member (64) being designed to be subjected:
- to a first adjustable pressure force (F1) applied by air from the compressor, the first adjustable pressure force returning the butterfly (36) to a closed position; and
- to a second mechanical force (F2) returning the butterfly (36) to an open position,
**characterised in that** the axis of rotation (38) is off-centre relative to a median segment (39) of said butterfly (36) such that the air in the channel (34) generates an aerodynamic torque (C) on said butterfly (36), said aerodynamic torque inducing, via the linking means (70), said second mechanical force (F2) on the actuation member (64).

2. Valve according to claim 1, **characterised in that** the actuation member (64) is a single-acting piston, said linking means (70) being connected to a piston rod.

3. Valve according to claim 1 or claim 2, **characterised in that** said butterfly (36) has a general disk shape.

4. Valve according to any one of the preceding claims, **characterised in that** the control device (42) includes a pressure reducer (44) arranged between a member (48) for extracting air in said channel (34) of the valve body (32), and a pressure chamber (62) defined by the actuation member (64).

5. Valve according to claim 4, **characterised in that** said pressure reducer (44) includes a torque motor (46) to vary the pressure of the extracted air flowing from the pressure reducer.

6. Valve according to any one of the preceding claims, **characterised in that** it includes a position sensor (74) of the actuation member (64), and/or a position sensor of the butterfly (36).

7. Aircraft turbine engine module (22) comprising a compressor (10) as well as a butterfly bleed valve (24) according to any one of the preceding claims, the channel (34) of the valve body (32) communicating with a stream (26) of the compressor (10).

8. Aircraft turbine engine (1) comprising a module (22) according to the preceding claim, as well as a system (28) for controlling the butterfly valve (24).

9. Turbine engine according to the preceding claim, **characterised in that** it is a turboprop.

10. Method for controlling bleeding within a compressor (10) of a turbine engine (1) according to claim 7 or claim 8, **characterised in that** it consists of adjusting, within said butterfly valve (24), the intensity of the first pressure force (F1) applied to the actuation member (64) and opposing said mechanical force (F2) induced by the aerodynamic torque applied to the butterfly (36), so as to control the opening/closure of the valve butterfly (24).
